# EUROPEAN PATENT SPECIFICATION

(11) **EP 1 434 377 B1**
(45) Date of publication and mention of the grant of the patent: **15.10.2008**
(21) Application number: 04008323.0
(22) Date of filing: 21.10.1998
(51) Int. Cl.: H04J 14/02, H04B 10/16, H04L 1/00

(54) **Remodulators for WDM optical communication systems**
Remodulator für optische WDM-Übertragungssysteme
Remodulateurs pour systèmes de communication optique par multiplexage de longueurs d'ondes

(30) Priority: 21.10.1997 US 955058
(43) Date of publication of application: 30.06.2004
(62) Divisional of application: 98956132.9
(73) Proprietor: Ciena Corporation, Linthicum, MD 21090 (US)
(72) Inventor: Alexander, Stephen B., c/o Intell. Property Dept., Linthicum, Maryland 21090 (US); Chaddick, Steve W. c/o Intellect. Prop. Department, Linthicum Maryland 21090 (US); Litz, Roy C., Freeland Maryland 21053 (US); Smith, Cecil D., Severna Park Maryland 21403 (US)
(74) Representative: Jeffrey, Philip Michael

(56) References cited:
- WO-A-95/19689
- US-A- 5 504 609
- US-A- 5 715 076
- US-A- 5 784 184
- TOMIZAWA M ET AL: "FORWARD ERROR CORRECTING CODES IN SYNCHRONOUS FIBER OPTIC TRANSMISSION SYSTEMS" JOURNAL OF LIGHTWAVE TECHNOLOGY, vol. 15, no. 1, January 1997 (1997-01), pages 43-51, XP000642276

## Description

The invention relates to wavelength division multiplexed optical communications generally and, more particularly, to remodulating channel selectors for selecting a particular channel wavelength and placing the information from that channel wavelength onto a newly generated optical channel.

Optical communication systems are a substantial and fast-growing constituent of communication networks. The expression "optical communication system," as used herein, relates to any system which uses optical signals to convey information across an optical waveguiding medium. Such optical systems include, but are not limited to, telecommunications systems, cable television systems, and local area networks (LANs). Optical systems are described in Gowar, Ed. Optical Communication Systems, (Prentice Hall, NY) c. 1993. Currently, the majority of optical communication systems are configured to carry an optical channel of a single wavelength over one or more optical waveguides. To convey information from plural sources, time-division multiplexing is frequently employed (TDM). In time-division multiplexing, a particular time slot is assigned to each signal source, the complete signal being constructed from the portions of the signals collected from each time slot. While this is a useful technique for carrying plural information sources on a single channel, its capacity is limited by fiber dispersion and the need to generate high peak power pulses.

While the need for communication services increases, the current capacity of existing waveguiding media is limited. Although capacity may be expanded e.g., by laying more fiber optic cables, the cost of such expansion is prohibitive. Consequently, there exists a need for a cost-effective way to increase the capacity of existing optical waveguides.

Wavelength division multiplexing (WDM) has been explored as an approach for increasing the capacity of existing fiber optic networks. In a WDM system, plural optical signal channels are carried over a single waveguide, each channel being assigned a particular wavelength. Through the use of optical amplifiers, such as doped fiber amplifiers, plural optical channels are directly amplified simultaneously, facilitating the use of WDM systems in long-distance optical networks.

To provide compatibility of WDM systems with existing networks, it is desirable to convert a signal from a received transmission wavelength from a customer to a specific channel wavelength within the WDM system. This is particularly true in WDM systems employing many channels, often referred to as "dense" WDM, where channel spacings are on the order of one nanometer or less. Such WDM systems require precise control of the optical signal wavelength for each channel in order to avoid " crosstalk," i.e., interference between adjacent channels. A WDM optical system for converting signals from received transmission wavelengths to specific channel wavelengths using optical remodulators is described in U.S. Patent 5,504,609.

A WDM optical system which uses both remodulators and diverse optical sources (e.g., to accommodate signals which are generated at the proper channel wavelength or optical channels being routed from another optical path) is described in U.S. patent no. 5, 726, 784.

While both the described approaches advantageously offer compatibility with existing optical communication systems, particularly those systems using SONET terminal receivers which conform to the SONET "long-haul" standard, i.e., terminals configured to detect low optical signal levels, it would be desirable to provide an output channel signal conforming to SONET "short-reach" interface standards, i.e., terminals configured to detect higher-level optical signals.

Previously, attention has been focused on conversion of a single transmission channel from a wavelength outside the wavelength band amplified by optical amplifiers to a wavelength within the wavelength band amplified by optical amplifiers and then back to the original transmission wavelength for reception by an optical receiver. U.S. Patent No. 5,267,073 describes wavelength conversion in a conventional single channel optical system to enable signal amplification by optical amplifiers. In the patent, an adapter is provided to receive a transmission optical signal having a wavelength which is outside the operating parameters of the optical amplifier. The signal is supplied to an optical-to-electronic converter module. The resultant electrical signal is output to an adjusting means comprising a laser piloting circuit for directly modulating a signal laser. The output of the signal laser is subsequently amplified by an optical amplifier. At the receive end, an adapter is provided to convert the optical signals from the amplifier into electrical signals which are fed to an adjustment module. The adjustment module comprises a laser piloting circuit which controls a laser transmitter. In this manner, the patent purports to avoid problems in which normal optical line receivers have problems with frequency response when they are coupled to optical amplifiers in optical fiber lines

There is a need in the art for WDM channel selectors which can both select a particular channel wavelength from a multiplexed optical signal and place the information from that channel onto a newly-generated optical signal, the optical signal selected to have the desired characteristics which make it compatible with the selected terminal receiver equipment. Such channel selectors would permit the use of less expensive terminal equipment, facilitating the use of wavelength division multiplexing in a greater variety of telecommunications applications.

In accordance with the present invention there is provided a communication method as claimed in claim 1 and a corresponding optical communication device as claimed in claim 6. Claims 1 and 6 are characterised over the disclosure of US-5504609.

The preferred embodiment provides a remodulating channel selector for a wavelength division multiplexed optical communication system. The remodulating selector receives a WDM input signal, selects a particular optical channel from the WDM signal, and places the information from the selected signal onto a newly-generated optical output signal. The remodulating selector typically comprises an optical input port configured to receive a wavelength division multiplexed optical communication signal from a wavelength division multiplexed optical communication system. An optical channel selector optically communicates with the optical input port to select a single optical channel from the WDM input signal. An optical-to -electrical converter optically communicates with the optical channel selector to receive the selected channel and output an electrical signal which corresponds to information from the selected optical channel. This information is placed onto an optical signal created by an optical signal emitter such as a laser or light-emitting diode (LED). When used in a WDM optical communication system with remodulators at the transmission input, the remodulating selectors provide complete control over the interfaces with optical transmitters and receivers, enabling a WDM system to interface with a broad range of optical transmitting and receiving equipment.

Some preferred embodiments of the present invention will now be described, by way of example only, and with reference to the accompanying drawings, in which:
FIG. 1 schematically depicts an optical communication system employing remodulating channel selectors according to an embodiment of the present invention;
FIG. 2 schematically depicts a remodulator used in the optical communication system of FIG. 1;
FIG. 3 illustrates a block diagram of a forward error correction encoder in accordance with an embodiment of the present invention;
FIG. 4 schematically depicts a remodulating channel selector used in the optical communication system of FIG. 1; and
FIG. 5 illustrates a block diagram of a forward error correction decoder in accordance with another embodiment of the present invention.

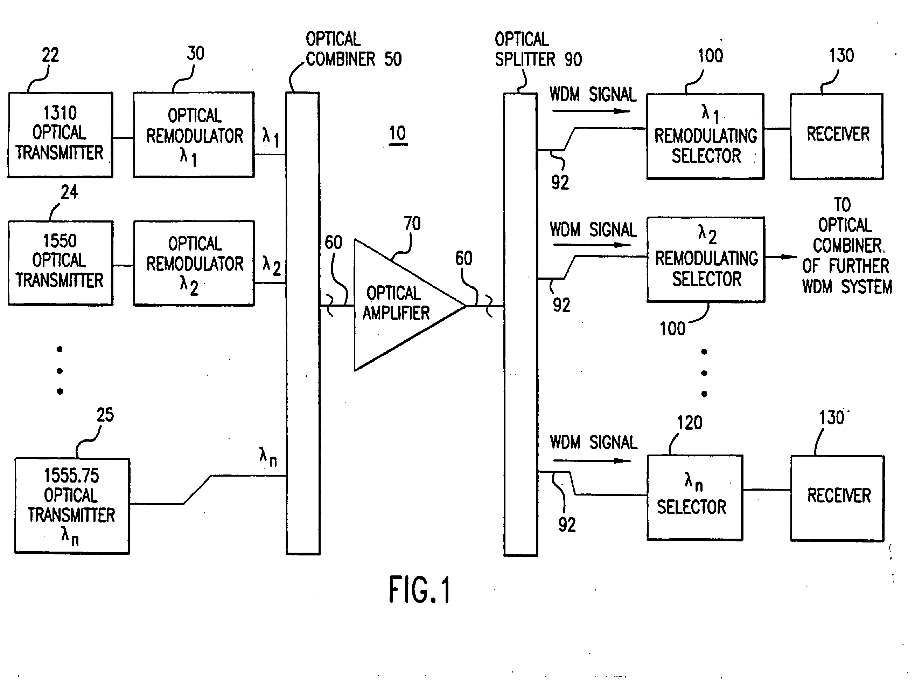

Turning to the drawings in detail in which like reference numerals indicate the same or similar elements in each of the several views, FIG. 1 depicts an optical communication system 10 according to an embodiment of the present invention. Optical communication system 10 operates to take optical transmission signals from diverse optical transmitters and other optical signal sources and map the signal sources onto a wavelength division optical communication system, i.e., a communication system in which individual optical signals correspond to optical channels within a wavelength division multiplexed optical signal carried on an optical waveguide. Optical communication system 10 includes a first set of one or more optical transmitters 22, 24, each optical transmitter emitting an information-bearing optical signal at a first transmission wavelength.

Optical transmitters 22 and 24 generally include a laser, such as a DFB semiconductor laser, and a modulator for creation of an information-bearing optical transmission signal. In an exemplary embodiment, optical transmitters 22 and 24 are SONET OC-48 transmitters. When plural optical transmitters are provided, the transmission wavelength of each transmitter can be the same or different. Because transmitters 22 and 24 may form part of an existing optical system, a wide variety of transmitters emitting in a broad range of wavelengths can be accommodated in the optical communication system of the present invention, thus ensuring compatibility with currently-deployed transmission equipment. Typical transmission elements emit wavelengths ranging from about 1300 to 1600 nm. Transmission elements in current optical communication systems and various optical modulation techniques employed therein are described in Gowar, Optical Communication Systems.

In the depicted exemplary embodiment, optical transmitter 22 is a 1310 nm optical transmitter and optical transmitter 24 is a 1550 optical transmitter, commercially available from NEC, Fujitsu, Alcatel, and Nortel.

Optical communication system 10 includes a plurality of remodulators 30 for receiving the transmitted information-bearing optical signal at transmission wavelength from the first set of optical transmitters and transmitting an information-bearing optical signal at a WDM optical system channel wavelength. The expression "information - bearing optical signal," as used herein, refers to an optical signal which has been coded with information, including, but not limited to, audio signals, video signals, and computer data, generally through modulation. Similarly, the expression "non-information-bearing optical signal," as used herein, relates to a CW optical signal which has not been coded with information, e.g., an optical carrier which has not been modulated. Typically, the wavelengths emitted by the remodulators are selected to be within the 1500 nanometer range, the range in which the minimum signal attenuation occurs for silica-based fibers. More particularly, the wavelengths emitted by the remodulators are selected to be in the range from 1530 to 1560 nanometers. However, other wavelength bands may be selected according to overall system requirements.

For a 16-channel wavelength division multiplexed optical communication system, an exemplary channel plan is set forth in Table 1 below. The optical channel plan dictates both the wavelengths of the optical remodulators and the corresponding wavelengths selected by the wavelength selectors in the optical receiving systems.

**Table 1**

| **Channel Number** | **Wavelength (nm)** |
|---|---|
| 1 | 1557.36 |
| 2 | 1556.56 |
| 3 | 1555.75 |
| 4 | 1554.94 |
| 5 | 1554.13 |
| 6 | 1553.33 |
| 7 | 1552.52 |
| 8 | 1551.72 |
| 9 | 1550.92 |
| 10 | 1550.12 |
| 11 | 1549.32 |
| 12 | 1548.51 |
| 13 | 1547.72 |
| 14 | 1546.92 |
| 15 | 1546.12 |
| 16 | 1545.32 |

Wavelength division multiplexed topical communication system 10 optionally includes a second set of one or more optical transmitters 25 which directly output an optical signal having a wavelength which corresponds to an optical channel within the channel plan of the communication system. Consequently, optical transmitters 25 optically communicate with optical multiplexer or combiner 50 without the need for remodulation by remodulators 30. Optical transmitters 25 are commercially available from a variety of suppliers, including the OCT-204 series of optical transmitters from Alcatel, the HT2H-LR1H optical transmitters from Fujitsu, and the ITS-2400 optical transmitters from NEC.

Wavelength division multiplexed optical communication system 10 further optionally comprises additional sources of optical signals, e.g., optical signals from add/drop multiplexers or demultiplexers from other optical systems: Examples of various configurations of WDM optical systems with diverse signal sources are described in US patent no. 5, 726, 784.

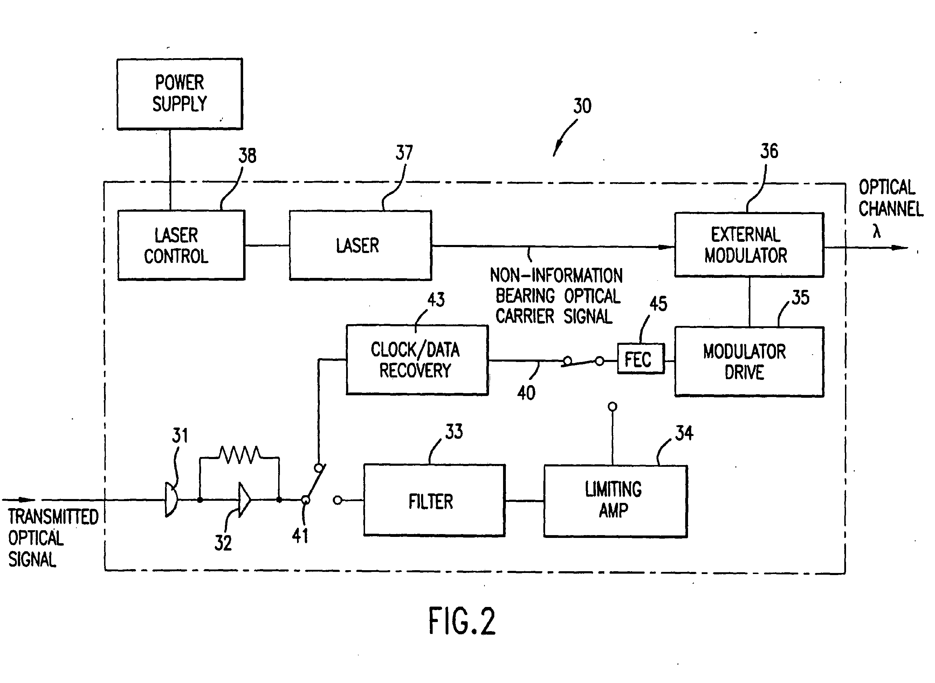

A remodulator 30 for use in optical communication system 10 is schematically depicted in FIG. 2. In remodulator 30, the transmitted optical signal is converted by electro-optical converter 31, typically a photodiode, to an electrical signal. The electrical signal is amplified by transimpedance amplifier 32, passed through filter 33 to limit the noise bandwidth and waveshape the signal, and further amplified by limiting amplifier 34. Optionally, remodulator 30 can include clock and data recovery circuit 40 for use with high data rate signals. Switch 41 automatically selects high data rate signals and passes them through clock/data recovery element 43. The selected signals are retimed, advantageously reducing jitter. The retimed signal exits clock and data recovery circuit through switch 42.

The resultant electrical signal is used to drive external modulator 36 through modulator driver 37. As used herein, the expression "external modulator" includes any modulator which acts on an optical carrier emitted from a continuous wave (CW) optical source, such as a laser. Such external modulators can be packaged with the optical source or packaged separately from the optical source.

Remodulator 30 also includes a optical source, such as laser 37, for delivering a non-information-bearing optical carrier signal to laser output waveguide 39. In an exemplary embodiment, laser 37 is a DFB semiconductor diode laser, generally comprising one or more III-V semiconductor materials, commercially available from a wide variety of suppliers such as Fujitsu, GEC Marconi, Alcatel, and Hewlett-Packard. The laser outputs an optical carrier signal at a particular channel wavelength, the wavelength corresponding to a channel selector wavelength included in the remodulating channel selector. Laser control 38 provides the required laser bias current as well as thermal control of the laser. Using thermal control, the precise operating wavelength of the laser is maintained, typically to within a one angstrom bandwidth.

External modulator 36 acts on the optical carrier signal output from laser 37, as opposed to acting on the laser itself or on a laser driver, as occurs in direct modulation systems. An exemplary external modulator employs a waveguiding medium whose refractive index changes according to the applied electrical field, i.e., a material exhibiting an electro-optic affect. Consequently, the phase of input optical carrier signals is altered as a result of the changing refractive index of the optical waveguide. A suitable electro-optic waveguiding material for the external modulators of the present invention is lithium niobate, LiNbO₃. An exemplary electro-optic modulator for use as external modulator 36 is a Mach-Zehnder interferometric modulator which provides high-speed intensity modulation of optical carriers. In the Mach-Zehnder configuration, two optical paths are provided. An incoming optical carrier is split between the two paths of the interferometer. At least one path of the interferometer is phase modulated. When the signal is recombined at the output, the light from the paths either constructively or destructively interferes, depending upon the electrical field applied to the surrounding electrodes during the travel time of the carrier, creating an amplitude-modulated output signal. Further details of electro-optic modulators are described in Becker, "Broad-Band Guided Wave Electrooptic Modulators," IEEE Journal of Quantum Electronics, Vol. QE-20, No. 7, July, 1984, pp. 723-727. Mach-Zehnder interferometers suitable for use in external electro-optic modulator 36 are commercially available from United Technologies, and IOC. The modulated output signal is the information-bearing optical channel whose wavelength corresponds to a particular channel selector wavelength in the optical communication system.

Alternatively, the external modulator employed in the remodulators of the preferred embodiment can be selected from electro-absorption external modulators. Electro-absorption modulators function by changing the bandgap of the modulating material to impart information to the optical carrier signal. Exemplary electro-absorption modulators are described in Wood, "Multiple Quantum Well (MQW) Waveguide Modulators," Journal of Lightwave Technology, Vol. 6, No. 6, June, 1988, pp. 743-757.

Remodulators 30 include forward error correction (FEC) encoders 45. The addition of forward error correction to a WDM optical communication system advantageously decreases the bit error rate (BER) by adding redundancy, e.g., coding bits, to the individual optical channels which comprise the WDM signal. In particular, the addition of FEC permits the WDM system to achieve substantially error-free performance in the presence of the nonlinearities present in optical communication system. At the receive end, a forward error correction decoder examines the coding bits to accurately reconstruct the transmitted information. A variety of coding algorithms may be used to accomplish forward error correction in the WDM optical systems of the present invention. Exemplary algorithms are convolutional encoding with threshold decoding, Viterbi decoding, or Reed-Solomon encoding/decoding. Detailed descriptions of these and other coding algorithms are found in Wiggert, Error-Control Coding and Applications, (Artech House, c. 1978).

Forward error correction in the WDM optical systems of the present invention enables a "channel trace" function that encodes the channel ID, source, and destination into a small overhead bit stream which would permit the remodulating channel selector to respond only to an incoming signal with the proper addressing. The use of channel tracing through forward error correction additionally permits channel path trace through the WDM system, a particularly useful feature for complex system topologies and WDM systems with extensive add/drop multiplexing or cross-connect features.

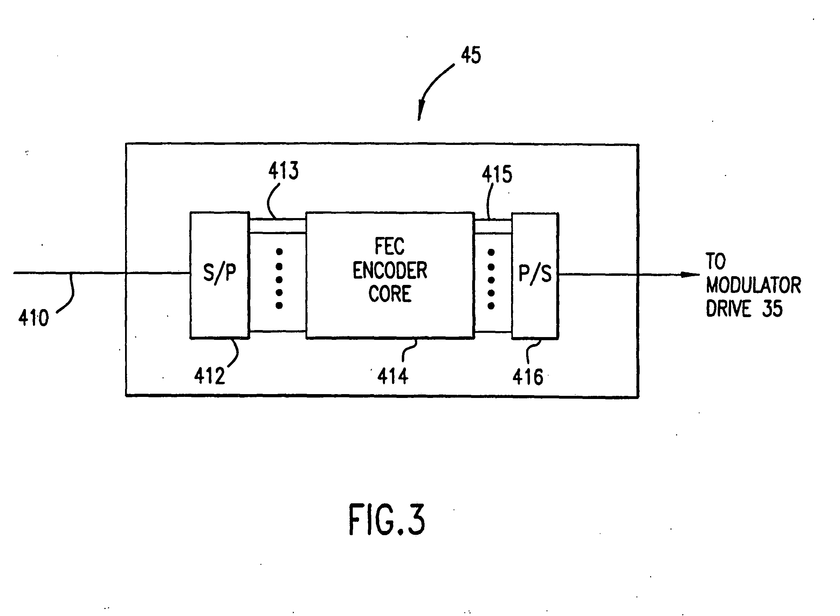

A encoder 45 is shown in greater detail in FIG. 3. Signals received from clock/data recovery circuit 43 are supplied to encoder 45 on input line 410. Serial-to-parallel converter circuit 412 converts the received serial data to parallel data. The output of serial-to-parallel converter circuit 412 is supplied on a plurality of lines 413 to FEC encoder core circuit 414, as described, for example, in U.S. Patent No. 6, 308, 295 "Parallel Spectral Reed-Solomon Encoder and Decoder" to Neifeld et al., filed October 7, 1997. FEC encoder core circuit 414 encodes the received data in parallel in accordance with a Reed-Solomon code by attaching a plurality of syndrome symbols or groupings of bits followed by an inverse Fourier transform of the data and syndromes. FEC encoder core circuit 414 outputs encoded data in parallel to parallel-to-serial converter 416, which serializes the data for output to modulator drive 35.

Returning to FIG. 1, each information-bearing optical signal produced by a remodulator constitutes a channel in optical system 10, the wavelength of which corresponds to a channel selector wavelength. The optical signal channels output from remodulators 30 are brought together in optical combiner 50 for conveyance to optical waveguide 60. Optical combiner 50 is selected from any passive optical component which can combine plural wavelengths into a single output medium. Frequently, optical splitters used to divide a signal among plural outputs are used as optical combiners, operated in reverse fashion from the splitter. Exemplary optical combiners include 1 x N passive splitters available from Corning, Inc., Corning, NY, 1 x N wideband single mode splitters available from IOT Integrierte Optik GmbH, Waghausel-Kirrlach, Germany, and fused fiber combiners available from Gould, Inc., Millersville, MD. The combination of channels forms a multiplexed optical signal which is output to waveguide 60. Optical waveguide 60 is typically a single-mode optical fiber such as SMF-28, available from Corning, and TRUEWAVE, available from AT&T Corp./Lucent Technologies, and is the principal transmission medium for the optical communication system. However, any optical waveguide which is capable of transporting multiple optical wavelengths can be employed as waveguide 60 in optical system 10.

Interposed along optical waveguide 60 are one or more optical amplifiers 70. Optical amplifiers 70 are selected from any device which directly increases the strength of plural optical signals without the need for optical-to-electrical conversion. In general, optical amplifiers 70 are selected from optical waveguides doped with rare earth ions such as erbium, neodymium, praseodymium, ytterbium, or mixtures thereof. Optical amplifiers, their materials, and their operation are further described in Gowar, Ed. Optical Communication Systems and in Desurvire, Erbium-Doped Fiber Amplifiers, (John Wiley & Sons, Inc., NY), c. 1994. Exemplary optical amplifier configurations are described in US 5, 504, 609 and US 5, 726, 784. Further descriptions of doped-fiber optical amplifier configurations suitable for use in the optical communication system of the present invention are described in Bjarklev, Optical Fiber Amplifiers: Design and System Applications, (Artech House, Norwood, MA) c. 1993.

Following transmission and amplification of the multiplexed optical signals along waveguide 60, a portion of the multiplexed optical signal must be sent to each of the remodulating channel selectors for selection and routing to an appropriate optical receiver. The multiplexed signal is input to optical splitter 90 which places a portion of the multiplexed signal onto plural output paths 92. Each output path 92 optically communicates with a remodulation channel selector 100. Optical splitter 90 is selected from any optical device which can divide an input optical signal and place it onto plural output paths. Exemplary splitters include passive optical components such as those components described for use as optical combiner 50. Splitter 90 in combination with remodulating channel selectors 100 constitute an exemplary wavelength demultiplexer.

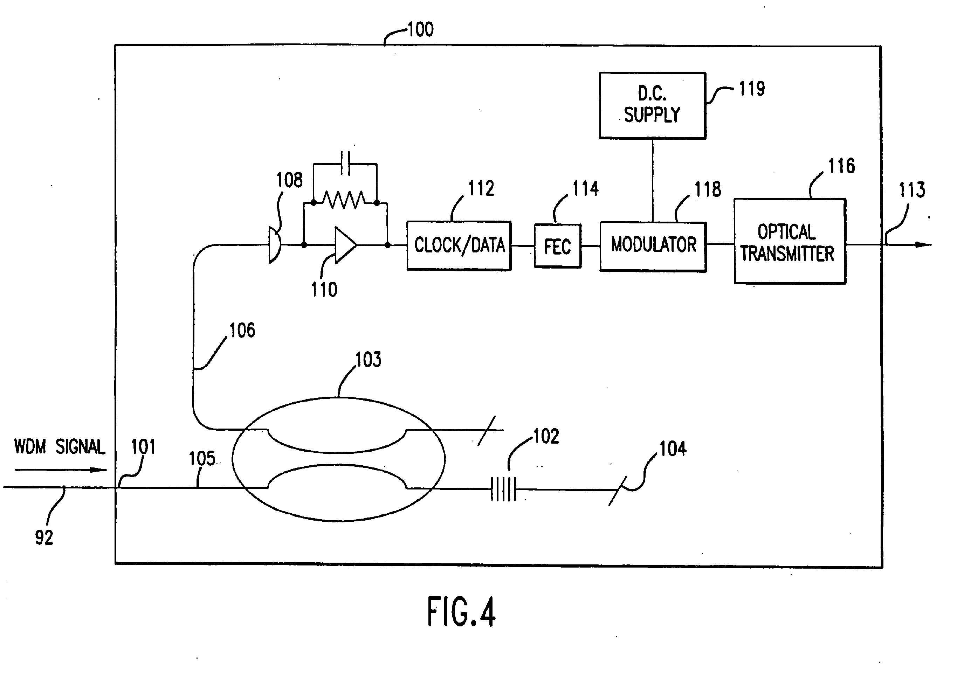

FIG. 4 schematically depicts an exemplary remodulating channel selector 100 for use in WDM optical communication system 10. Remodulating channel selector 100 includes an optical input port 101 for receiving the WDM optical signal from splitter output path 92. The WDM optical signal traverses optical path 105 through splitter 103 to channel selector 102. Channel selector 102 passes optical signals having wavelengths other than the channel wavelength to be processed by the remodulating channel selector. These non-selected channels pass through low reflectivity port 104 and exit the optical communication system. The low reflectivity port 104 may be an angled fiber cut, although any low reflectivity waveguide termination technique may be employed. The selected channel wavelength is reflected by channel selector 102 through splitter 103 onto optical path 106. In an exemplary embodiment, optical splitter 103 is a fused fiber coupler and channel selector 102 comprises a Bragg grating member configured to reflect the selected channel wavelength. Preferably, the Bragg grating comprises a series of photoinduced refractive index perturbations in an optical fiber which causes the reflection of optical signals within a selected wavelength band. Bragg gratings suitable for use in the optical system of the present invention are described in Morey et al., "Photoinduced Bragg Gratings in Optical Fibers," Optics and Photonics News, February 1994, pp. 8-14.

Although a Bragg grating is depicted as the channel selecting element, it is understood that numerous other optical components can be employed as channel selector 102. Such optical components include, but are not limited to, multilayer interference filters, tunable Fabry-Perot selectors, and wavelength routers. In an exemplary embodiment, the optical bandwidth is selected to be sufficiently narrow to minimize the deleterious effects of amplified spontaneous emission (ASE).

The selected optical channel is converted by electro-optical converter 108, typically a photodiode, to an electrical signal. The electrical signal is amplified by transimpedance amplifier 110 and routed through clock and data recovery circuit 112 for retiming. In an exemplary embodiment, the electrical bandwidth of the optical-to-electrical converter and the transimpedance amplifier is selected to match the data rate of the incoming signal. Optionally, the remodulating channel selector includes FEC decoder 114 circuit for accurate reconstruction of the transmitted signal, as discussed above.

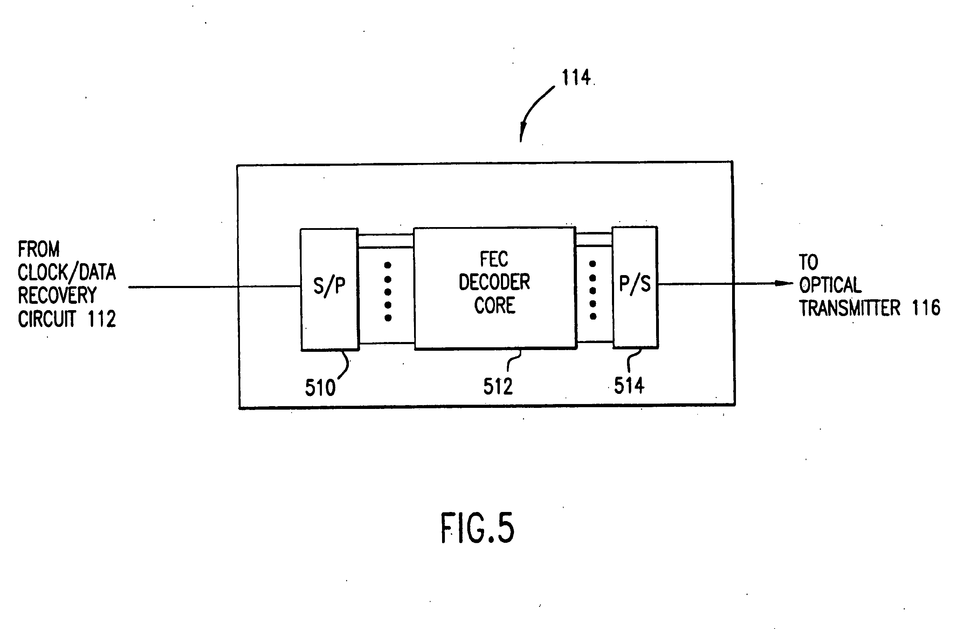

As shown in Fig. 5, FEC decoder 114 includes a serial-to-parallel converter 510, and FEC decoder core circuit 512 and a parallel-to-serial converter circuit 514. Data from clock/data recovery circuit 112 is supplied to a serial-to-parallel converter 510, which supplies a parallel output to FEC decoder core circuit 512, as described, for example, in Neifeld et al., *supra.* As further described in Neifeld et al., FEC decoder core circuit 512 includes a Fourier transform circuit, Berlekamp algorithm circuit and Recursive Extension circuit (not shown). Received data is decoded by initially performing the Fourier transform. The data is next typically supplied to both a temporary memory and the Berlekamp algorithm circuit, which acts on the data in parallel to supply a parallel output to the Recursive Extension circuit. The recursive extension circuit, also operates in parallel, to generate an error signal, which is compared with the received data stored in memory. As a result, errors which may have occurred during transmission, for example, are corrected. The resulting parallel output of FEC decoder core circuit 512 is supplied to parallel-to-serial conversion circuit 514 and passed to modulator 118. The parallel construction of FEC decoder 114, as well as FEC encoder 45 descirbed above, permits encoding and decoding of data at high speeds.

Returning to FIG. 4, direct modulation of optical transmitter 116 by way of modulator 118 will now be described. Although "modulator" 118 is depicted as a discrete device, in actuality it can consist of d.c. power supply 119 interconnected with an electronic switch. The electronic switch in turn optically communicates with the electrical signal containing the information from the selected channel output through the optical-to-electrical converter and processed by the subsequent elements. The electronic switch controls the flow of current from the d.c. supply to the optical emitter in response to the information received from the electrical signal. Alternatively, the direct modulation of the emitter can be performed using a voltage-controlled current source for the elements labeled 118 and 119 in FIG. 3. Such a current source for the optical emitter provides a current whose magnitude is directly related to the applied voltage. The applied voltage represents the information received from the optical-to electrical converter; alternatively the current may be directly derived from the modulating voltage.

Optical transmitter 116 is selected from a variety of optical devices, depending upon the optical interface required for receiver 130. When the signal emitted by the remodulating channel selector is destined for long distance transmission (e.g., through the optical combiner of a further WDM optical system as depicted in FIG. 1), the optical emitter is selected to be a DFB laser. When the signal emitted by the remodulating channel selector is destined for an adjacent receiver, the optical emitter within the optical transmitter is selected from lower-cost, shorter-range optical emitters such as Fabry-Perot lasers, light-emitting diodes, and superluminescent diodes.

The wavelength of the optical emitter employed in optical transmitter 116 can be the same wavelength as the wavelength of the optical channel selected by the particular channel selector or it can be a different wavelength. When the optical channel is output directly to a receiver, the wavelength of the optical signal is not critical. In such an embodiment, the same wavelength can be output by all of the optical transmitters 116. Since an optical signal being output directly to an optical receiver need not be optically amplified, the optical emitter can be selected to have any wavelength detectable by the optical receiver (e.g., a wavelength outside the gain band of rare-earth doped fiber amplifiers such as 1310 nm). However, if the optical signal emitted by the remodulating channel selector is destined for transmission in the same or another WDM system, then the wavelength of the optical emitter is selected to be compatible with the channel plan of that system. For example, the optical emitter may create a signal having the same wavelength as the selected optical signal, or it may produce an optical signal having a wavelength which corresponds to another channel from the input WDM optical signal. If the remodulating channel selectors are incorporated into a switching matrix, a variable wavelength optical emitter can be used to dynamically select an available wavelength within a WDM optical channel plan.

In an alternate embodiment (not shown) the optical signal emitter is externally modulated, e.g., as in the remodulators of FIG. 2. External modulation is particularly advantageous when the signal output by the remodulating channel selector is destined for long-distance transmission. In such an embodiment, the remodulating channel selectors can serve to reshape and retime an optical signal, e.g., an optical signal which has traversed the maximum dispersion-limited transmission distance (e.g., a distance of approximately 600 km for optical fibers such as SMF-28).

In this manner, a modulated optical signal is output by optical transmitter 116 through remodulating channel selector output port 113. The remodulating channel selector output signal is transmitted to optical receiver 130. Receiver 130 generally detects the optical signal and converts it to an electrical signal, typically through the use of a photodiode device. Various optical receivers suitable for use in optical system 10 are described in Gowar, Optical Communication Systems, discussed above. In optical communication system 10, receiver 130 will frequently be part of an existing optical communication system to which the remodulated optical signal is routed. Consequently, the optical system 10 can function with numerous types of receivers to ensure compatibility with existing optical equipment. In particular, the presence of remodulating channel selectors 100 enables the WDM optical communication system to communicate with optical receivers conforming to the SONET "short-haul" standard. Further descriptions of SONET interface standards are found in SONET Transport Systems: Common Criteria, (GR-253-CORE, Issue 1, December, 1994)_{.}

Alternatively, as depicted in FIG. 1, the output of a remodulating channel selector is conveyed to another WDM optical system or a portion of the same WDM optical system through input to an optical combiner for multiplexing with other optical signals or routing, e.g., through an add/drop multiplexer.

Optionally, channel selectors 120 are provided for selecting an optical channel from an input WDM optical signal. Such channel selectors, described in more detail in the parent applications incorporated by reference above, select an optical channel and directly output the selected channel without remodulation. Such channel selectors are used particularly when the optical receivers with which they communicate conform to the SONET "long-haul" standard. Such "non-remodulating" channel selectors can also route their selected optical channels to an optical combiner for further transmission in the same WDM optical system or in a different WDM optical system.

While the foregoing invention has been described in terms of the embodiments discussed above, numerous variations are possible. Accordingly, modifications and changes such as those suggested above, but not limited thereto, are considered to be within the scope of following claims.

## Claims

1. A communication method comprising the steps of:
receiving a first plurality of information-bearing optical signals and converting them to a first plurality of information streams in a plurality of electro-optical converters (31);
amplifying said first plurality of information streams; filtering the amplified information streams;
amplifying the filtred amplified information streams to output a second plurality of information streams;
transmitting from a plurality of optical sources (37) a plurality of non-information-bearing optical carrier signals;
using each of said second plurality of information streams to drive one of a plurality of external modulators (36), wherein each of which acts on a respective one of said plurality of non-information-bearing optical carrier signals, to produce a corresponding second plurality of information-bearing optical signals, each at a wavelength corresponding to a respective one of a plurality of optical channels, and each of said second plurality of information-bearing optical signals being at a respective one of a plurality of wavelengths; and
combining said second plurality of information-bearing optical signals onto an optical communication path (60);
**characterised by**:
encoding each of said second plurality of information streams including channel ID, source and destination information in an overhead bit stream in accordance with a forward error correction code to output a third plurality of information streams; and driving the plurality of external modulators (36) with the third plurality of encoded information streams such that each of said second plurality of information-bearing optical signals carries data associated with a respective one of said third plurality of information streams associated with a respective one of said plurality of optical channels.

2. A communication method in accordance with claim 1, wherein said receiving step further comprises the steps of:
receiving an additional plurality of information-bearing optical signals, each of which carrying a respective one of an additional plurality of information streams;
converting each of said additional plurality of information-bearing optical signals into a corresponding one of an additional plurality of electrical signals.

3. A communication method in accordance with any preceding claim, wherein said forward error correction code comprises a Reed-Solomon code.

4. A communication method in accordance with any of claims 1-2, wherein said forward error correction code comprises a Viterbi code.

5. A communication method in accordance with any of claims 1-2, wherein said forward error correction code comprises a convolutional code.

6. An optical communication device, comprising:
a plurality of photodetectors (31), each being configured to sense a respective one of a first plurality of information-bearing optical signals and output a corresponding one of a first plurality of electrical signals in response thereto;
two amplifiers (32,34) and a filter (33) associated with each photodetector (31);
the first amplifier (32) for amplifying one of the first plurality of electrical signals; the filter (33) for filtering the signal output by the first amplifier (32); and the second amplifier (34) for amplifying the output of the filter (33) and outputting a second plurality of electrical signals;
a plurality of external modulators (36) and modulator drives (35);
a plurality of optical emitters (37), each configured to output a respective one of a plurality of non-information-bearing optical carrier signals, each of said plurality of non-information-bearing optical carrier signals being acted on b one of the plurality of external modulators (36) by using a respective modulor drive (35) to produce a corresponding second plurality of information-bearing optical signals, each at a wavelength corresponding to a respective one of a plurality of optical channels, and each of said second plurality of information-bearing optical signals being at a respective one of a plurality of wavelengths; and
an optical multiplexer (50) coupled to each of said plurality of optical emitters (37), said optical multiplexer (50) being configured to receive said second plurality of information-bearing optical signals and supply said second plurality of information-bearing optical signals on an optical communication path (60);
**characterised by** comprising:
a plurality of encoders (45) configured to receive a respective one of said second plurality of electrical signals, each of said plurality of encoders (45) being configured to encode data carried by each of said second plurality of electrical signals including channel ID, source and destination information in an overhead bit stream in accordance with a forward error correction code and output a respective one of a third plurality of electrical signals, each of said plurality of non-information-bearing optical carrier signals being acted on by using a respective drive (35), by one of said plurality of external modulators (36) in accordance with a respective one of said third plurality of electrical signals such that each of said second plurality of information-bearing optical signals carries data associated with a respective one of said third plurality of electrical signals associated with a respective one of said plurality of optical channels.

7. An optical communication device in accordance with claim 6 , wherein said forward error correction code comprises a Reed-Solomon code.

8. An optical communication device in accordance with claim 6, wherein said forward error correction code comprises a Viterbi code.

9. An optical communication device in accordance with claim 6, wherein said forward error correction code comprises a convolutional code.

## Patentansprüche

1. Kommunikationsverfahren mit den Schritten:
Empfangen einer ersten Mehrzahl von informationstragenden optischen Signalen und Umsetzern dieser in eine erste Mehrzahl von Informationsströmen in einer Mehrzahl von elektro-optischen Umsetzern (31),
Verstärken der ersten Mehrzahl von Informationsströmen,
Filtern der verstärkten Informationsströme,
Verstärken der gefilterten verstärkten Informationsströme zum Ausgeben einer zweiten Mehrzahl von Informationsströmen,
Übermitteln einer Mehrzahl von nicht-informationstragenden optischen Trägersignalen von einer Mehrzahl von optischen Quellen (37),
Verwenden eines jeden Stroms der zweiten Mehrzahl von Informationsströmen zum Treiben eines Modulators einer Mehrzahl von externen Modulatoren (36),
wobei jeder von diesen auf ein jeweiliges Trägersignal aus der Mehrzahl von nicht-informationstragenden optischen Trägersignalen wirkt, um eine entsprechende zweite Mehrzahl von informationstragenden optischen Signalen zu erzeugen, jede bei einer Wellenlänge entsprechend eines jeweiligen Kanals einer Mehrzahl von optischen Kanälen, wobei sich jedes der zweiten Mehrzahl von informationstragenden optischen Signalen bei einer jeweiligen Wellenlänge einer Mehrzahl von Wellenlängen befindet, und
Kombinieren der zweiten Mehrzahl von informationstragenden optischen Signallen auf einen optischen Kommunikationspfad (60),
**gekennzeichnet durch**:
Kodieren eines jeden der zweiten Mehrzahl von Informationsströmen einschließlich von. Kanal-ID, Quellen- und Zielinformation in einem Overhead-Bitstrom in Übereinstimmung mit einem Vorwärfsfehlerkorrekturkode zum Ausgeben einer dritten Mehrzahl von Informationsströmen und
Treiben der Mehrzahl von externen Modulatoren (36) mit der dritten Mehrzahl von kodierten Informationsströmen, so dass jedes der zweiten Mehrzahl von informationstragenden optischen Signalen Daten trägt, die einem jeweiligen Informationsstrom der dritten Mehrzahl von Informationsströmen zugeordnet sind, der einem jeweiligen der Mehrzahl von optischen Kanälen zugeordnet ist.

2. Kommunikationsverfahren gemäß Anspruch 1,
wobei der Empfangsschritt ferner umfasst:
Empfangen einer zusätzlichen Mehrzahl von informationstragenden optischen Signalen, wobei jedes davon einen jeweiligen Informationsstrom einer zusätzlichen Mehrzahl von Informationsströmen trägt,
Umsetzen eines jeden der zusätzlichen Mehrzahl von informationstragenden optischen Signalen in ein entsprechendes Signal einer zusätzlichen Mehrzahl von elektrischen Signalen.

3. Kommunikationsverfahren nach einem der vorstehenden Ansprüche,
wobei der Vorwärtsfehlerkorrekturkode einen Reed-Solomon-Kode umfasst.

4. Kommunikationsverfahren nach einem der Ansprüche 1 bis 2,
wobei der Vorwärtsfehlerkorrekturkode einen Viterbi-Kode umfasst.

5. Kommunikationsverfahren nach einem der Ansprüche 1 bis 2,
wobei der Vorwärtsfehlerkorrekturkode einen Faltungskode umfasst.

6. Optische Kommunikationsvorrichtung mit:
einer Mehrzahl von Fotodetektoren (31), von denen jeder ausgestaltet ist, ein jeweiliges Signal einer ersten Mehrzahl von informationstragenden optischen Signalen zu erfassen und ein Signal einer ersten Mehrzahl von elektrischen Signalen in Antwort darauf auszugeben,
zwei Verstärkern (32, 34) und einem Filter (33), die einem jeden Fotodetektor (31) zugewiesen sind,
wobei der erste Verstärker (32) zum Verstärken eines Signals der ersten Mehrzahl von elektrischen Signalen vorgesehen ist, das Filter (33) zum Filtern des Signals vorgesehen ist, das von dem ersten Verstärker (32) ausgegeben wird, und der zweite Verstärker (34) zum Verstärken der Ausgabe des Filters (33) und zum Ausgeben einer zweiten Mehrzahl von elektrischen Signalen vorgesehen ist, einer Mehrzahl von externen Modulatoren (36) und Modulatortreibern (35),
einer Mehrzahl von optischen Emittern (37), von denen jeder ausgestaltet ist, ein jeweiliges Signal einer Mehrzahl von nicht-informationstragenden optischen Trägersignalen auszugeben, wobei auf jedes der Mehrzahl von nicht-informationstragenden optischen Trägersignalen durch einen Modulator aus der Mehrzahl von externen Modulatoren (36) unter Verwendung eines jeweiligen Modulatortreibers (35) gewirkt wird, um eine entsprechende zweite Mehrzahl von informationstragenden optischen Signalen zu erzeugen, jedes bei einer Wellenlänge entsprechend einem jeweiligen Kanal einer Mehrzahl von optischen Kanälen, wobei sich jedes der zweiten Mehrzahl von informationstragenden optischen Signalen bei einer jeweiligen Wellenlänge einer Mehrzahl von Wellenlängen befindet, und
einem optischen Multiplexer (50), der mit jedem der Mehrzahl von optischen Emittern (37) gekoppelt ist, wobei der optische Multiplexer (50) ausgestaltet ist, die zweite Mehrzahl von informationstragenden optischen Signalen zu empfangen und die zweite Mehrzahl von informationstragenden optischen Signalen auf einen optischen Kommunikationspfad (60) zu führen,
**gekennzeichnet durch**:
eine Mehrzahl von Kodierern (45), die jeweils ausgestaltet sind, ein Signal der zweiten Mehrzahl von elektrischen Signalen zu empfangen, wobei jeder der Mehrzahl von Kodierern (45) ausgestaltet ist, Daten zu kodieren, die von jedem Signal der zweiten Mehrzahl von elektrischen Signalen geführt werden, einschließlich von Kanal-ID, Quellen- und Ziel-Information in einem Overhead-Bitstrom in Übereinstimmung mit einem Vorwärtsfehlerkorrekturkode, und ein jeweiliges einer dritten Mehrzahl von elektrischen Signalen auszugeben, wobei auf jedes Signal der Mehrzahl von nicht-informationstragenden optischen Trägersignalen unter Verwendung eines jeweiligen Treibers (35) **durch** einen Modulator der Mehrzahl von externen Modulatoren (36) gemäß einem jeweiligen Signal der dritten Mehrzahl von elektrischen Signalen gewirkt wird, so dass jedes der zweiten Mehrzahl von informationstragenden optischen Signalen Daten führt, die einem jeweiligen Signal der dritten Mehrzahl von elektrischen Signalen zugeordnet sind, die einem jeweiligen Kanal der Mehrzahl von optischen Kanälen zugeordnet sind.

7. Optische Kommunikationsvorrichtung nach Anspruch 6,
wobei der Vorwärtsfehlerkorrekturkode einen Reed-Solomon-Kode umfasst.

8. Optische Kommunikationsvorrichtung nach Anspruch 6,
wobei der Vorwärtsfehlerkorrekturkode einen Viterbi-Kode umfasst.

9. Optische Kommunikationsvorrichtung nach Anspruch 6,
wobei der Vorwärtsfehlerkorrekturkode einen Faltungskode umfasst.

## Revendications

1. Procédé de communication comprenant les étapes consistant à :
recevoir une première pluralité de signaux optiques portant des informations et les convertir en une première pluralité de flux d'informations dans une pluralité de convertisseurs électro-optiques (31) ;
amplifier ladite première pluralité de flux d'informations ;
filtrer les flux d'informations amplifiés ;
amplifier les flux d'informations amplifiés filtrés pour sortir une deuxième pluralité de flux d'informations ;
transmettre à partir d'une pluralité de sources optiques (37) une pluralité de signaux porteurs optiques ne portant pas d'information ;
utiliser chacun de ladite deuxième pluralité de flux d'informations pour piloter un modulateur d'une pluralité de modulateurs externes (36),
dans lequel chacun agit sur un signal respectif de ladite pluralité de signaux porteurs optiques ne portant pas d'information, pour produire une seconde pluralité correspondante de signaux optiques portant des informations, chacun à une longueur d'onde correspondant à un canal respectif d'une pluralité de canaux optiques, et chacun de ladite seconde pluralité de signaux optiques portant des informations étant à une longueur d'onde respective d'une pluralité de longueurs d'onde ; et
combiner ladite seconde pluralité de signaux optiques portant des informations sur une voie de communication optique (60) ;
**caractérisé par** l'étape consistant à :
coder chacun de ladite deuxième pluralité de flux d'informations comprenant des informations d'identification de canal, de source et de destination dans un train de bits en surdébit selon un code de correction d'erreurs sans voie de retour pour sortir une troisième pluralité de flux d'informations ; et
piloter la pluralité de modulateurs externes (36) avec la troisième pluralité de flux d'informations codées de sorte que chacun de ladite seconde pluralité de signaux optiques portant des informations porte des données associées à un flux respectif de ladite troisième pluralité de flux d'informations associés à un canal respectif de ladite pluralité de canaux optiques.

2. Procédé de communication selon la revendication 1, dans lequel ladite étape de réception comprend en outre les étapes consistant à :
recevoir une pluralité additionnelle de signaux optiques portant des informations, dont chacun porte un flux respectif de la pluralité additionnelle de flux d'informations ;
convertir chacun de ladite pluralité additionnelle de signaux optiques portant des informations en un signal correspondant d'une pluralité additionnelle de signaux électriques.

3. Procédé de communication selon l'une quelconque des revendications précédentes, dans lequel ledit code de correction d'erreurs sans voie de retour comprend un code Reed-Solomon.

4. Procédé de communication selon l'une quelconque des revendications 1 et 2, dans lequel ledit code de correction d'erreurs sans voie de retour comprend un code de Viterbi.

5. Procédé de communication selon l'une quelconque des revendications 1 et 2, dans lequel ledit code de correction d'erreurs sans voie de retour comprend un code de convolution.

6. Dispositif de communication optique, comprenant :
une pluralité de photodétecteurs (31), chacun étant configuré pour capter un signal respectif d'une première pluralité de signaux optiques portant des informations et sortir un signal correspondant d'une première pluralité de signaux électriques en réponse à ces signaux optiques ;
deux amplificateurs (32, 34) et un filtre (33) associés à chaque photodétecteur (31) ;
le premier amplificateur (32) étant destiné à amplifier un signal de la première pluralité de signaux électriques ; le filtre (33) étant destiné à filtrer le signal sorti par le premier amplificateur (32) ; et le second amplificateur (34) étant destiné à amplifier la sortie du filtre (33) et sortir une deuxième pluralité de signaux électriques ;
une pluralité de modulateurs externes (36) et de pilotes de modulateur (35) ;
une pluralité d'émetteurs optiques (37), chacun étant configuré pour sortir un signal respectif d'une pluralité de signaux porteurs optiques ne portant pas d'information, un modulateur de la pluralité de modulateurs externes (36) agissant sur chacun de ladite pluralité de signaux porteurs optiques ne portant pas d'information en utilisant un pilote de modulateur respectif (35) pour produire une seconde pluralité correspondante de signaux optiques portant des informations, chacun à une longueur d'onde correspondant à un canal respectif d'une pluralité de canaux optiques, et chacun de ladite seconde pluralité de signaux optiques portant des informations étant à une longueur d'onde respective d'une pluralité de longueurs d'onde ; et
un multiplexeur optique (50) couplé à chacun de ladite pluralité d'émetteurs optiques (37), ledit multiplexeur optique (50) étant configuré pour recevoir ladite seconde pluralité de signaux optiques portant des informations et délivrer ladite seconde pluralité de signaux optiques portant des informations sur une voie de communication optique (60) ;
**caractérisé en ce qu'**il comprend :
une pluralité de codeurs (45) configurés pour recevoir un signal respectif de ladite deuxième pluralité de signaux électriques, chacun de ladite pluralité de codeurs (45) étant configuré pour coder des données portées par chacun de ladite deuxième pluralité de signaux électriques comprenant des informations d'identification de canal, de source et de destination dans un train de bits en surdébit selon un code de correction d'erreurs sans voie de retour et sortir un signal respectif d'une troisième pluralité de signaux électriques, chaque modulateur de ladite pluralité de modulateurs externes (36) agissant sur chacun de ladite pluralité de signaux porteurs optiques ne portant pas d'information en utilisant un pilote respectif (35) selon un signal respectif de ladite troisième pluralité de signaux électriques de sorte que chacun de ladite deuxième pluralité de signaux électriques portant des informations porte des données associées à un signal respectif de ladite troisième pluralité de signaux électriques associés à un canal respectif de ladite pluralité de canaux optiques.

7. Dispositif de communication optique selon la revendication 6, dans lequel ledit code de correction d'erreurs sans voie de retour comprend un code de Reed-Solomon.

8. Dispositif de communication optique selon la revendication 6, dans lequel ledit code de correction d'erreurs sans voie de retour comprend un code de Viterbi.

9. Dispositif de communication optique selon la revendication 6, dans lequel ledit code de correction d'erreurs sans voie de retour comprend un code de convolution.
